# FASCICULE DE BREVET EUROPEEN

(11) **EP 2 693 338 B1**
(45) Date de publication et mention de la délivrance du brevet: **05.09.2018**
(21) Numéro de dépôt: 13178110.6
(22) Date de dépôt: 26.07.2013
(51) Int. Cl.: G06F 11/07

(54) **Procédé de surveillance de l'exécution coordonnée de taches séquencées par une carte électronique comportant au moins deux processeurs synchronisés sur une même horloge**
Verfahren zur Überwachung der koordinierten Ausführung von Aufgaben, die von einer elektronischen Karte sequenziell gesteuert werden, die mindestens zwei auf dieselbe Uhr synchronisierte Prozessoren umfasst
Method for monitoring the coordinated execution of tasks sequenced by an electronic card having at least two processors synchronised on the same clock

(30) Priorité: 30.07.2012 FR 1257379
(43) Date de publication de la demande: 05.02.2014
(73) Titulaire: Airbus Opérations SAS, 31060 Toulouse (FR)
(72) Inventeur: Tost, Gilles, 31170 Tournefeuille (FR); Roblero Martinez, David, 31500 Toulouse (FR); Dejean, Thierry, 31290 Villefranche de Lauragais (FR); Deuneville, Sophie, 31700 Mondonville (FR); Marliere, Laurent, 31470 Fontenilles (FR); Blouin, Hélène, 31620 Fronton (FR)
(74) Mandataire: Gevers & Orès

(56) Documents cités:
- EP-A1- 1 990 733
- WO-A1-92/03785
- US-A1- 2009 055 685

## Description

### DOMAINE TECHNIQUE GENERAL ET ART ANTERIEUR

La présente invention concerne le domaine général des systèmes électroniques comportant plusieurs processeurs pour exécuter des tâches fonctionnelles. L'invention s'applique plus particulièrement à un système électronique se présentant sous la forme d'un calculateur électronique embarqué à bord d'un aéronef.

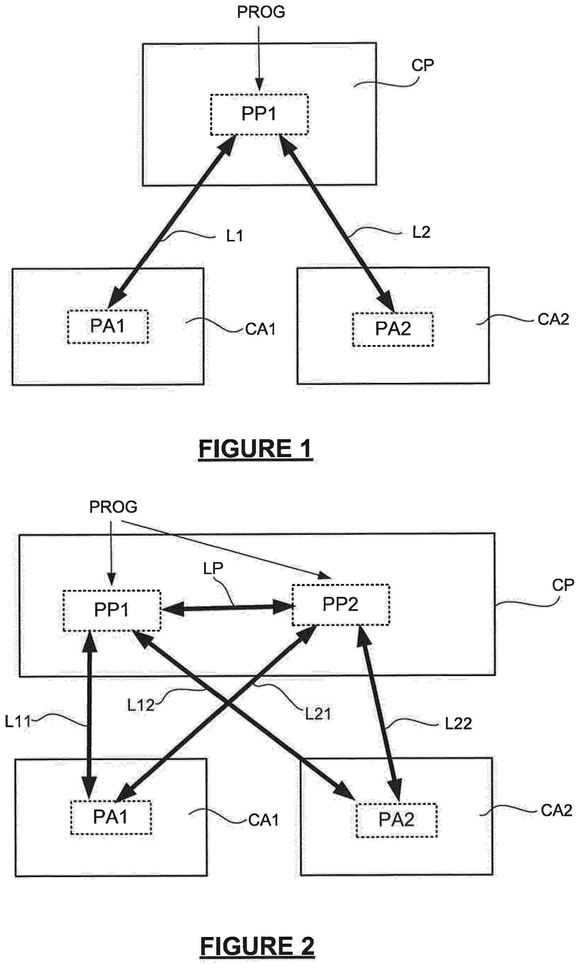

De manière classique, en référence à la figure 1, un calculateur de vol comporte une carte de circuit imprimé principale CP et deux cartes de circuit imprimé auxiliaires CA1, CA2. De manière traditionnelle, chaque carte principale CP et auxiliaire CA1, CA2 comporte un processeur PP1, PA1, PA2 adapté pour réaliser des tâches fonctionnelles définies dans un programme PROG communiqué à la carte principale CP et interprété par le processeur PP1 de la carte principale CP.

Les processeurs PP1, PA1, PA2 des différentes cartes CP, CA1, CA2 sont reliés par des liaisons de communication L1, L2, par exemple, des bus de communication. A titre d'exemple, chaque carte auxiliaire CA1, CA2 comporte un processeur auxiliaire PA1, PA2 dont une des fonctions consiste à gérer les données d'entrée et de sortie du calculateur. Par la suite, les données d'entrée/sortie sont désignées donnée I/O pour données « Input/output ». Par exemple, le processeur auxiliaire PA1, PA2 de la carte auxiliaire CA1, CA2 lit des données issues de l'aéronef et envoie des ordres à des dispositifs de l'aéronef. La lecture de données et l'émission d'ordres sont des exemples de tâches fonctionnelles réalisées par le processeur auxiliaire PA1, PA2 de la carte auxiliaire CA1, CA2.

Autrement dit, le processeur principal PP1 de la carte principale CP interprète les tâches fonctionnelles du programme et en communique certaines, via les liaisons de communication L1, L2, aux processeurs auxiliaires PA1, PA2 des cartes auxiliaires CA1, CA2 afin que ces derniers réalisent une lecture de données ou délivrent un ordre.

De manière classique, les tâches fonctionnelles du programme PROG sont séquencées et doivent être réalisées dans un ordre déterminé. Pour permettre une exécution ordonnée des tâches du programme PROG, la carte principale CP possède une horloge qui permet de synchroniser l'exécution des tâches. Des instructions des tâches fonctionnelles sont ensuite communiquées à un processeur auxiliaire PA1, PA2 d'une des cartes auxiliaires.

Afin d'assurer la fiabilité du calculateur, il est nécessaire de disposer de moyens de contrôle de la coordination de l'exécution des tâches du processeur principal PP1 avec celles des processeurs auxiliaires PA1, PA2. En pratique, l'horloge des processeurs auxiliaires PA1, PA2 est sensiblement plus rapide que celle du processeur principal PP1 étant donné que les cartes auxiliaires CA1, CA2 doivent être hautement réactives pour surveiller les entrées/sorties. Autrement dit, le processeur principal PP1 et le processeur auxiliaire PA1 sont asynchrones.

Pour permettre la coordination de processeurs asynchrones, on connaît dans l'art antérieur un procédé DMA pour « Direct Memory Access » entre un processeur principal PP1 et un processeur auxiliaire PA1, PA2 qui permet de vérifier que les deux processeurs PP1, PA1 ou PP1, PA2 communiquent de manière coordonnée.

Cette liaison DMA permet une surveillance réciproque des processeurs asynchrones mais demeure complexe à mettre en oeuvre car elle doit, d'une part, s'assurer que le processeur principal PP1 est sain et d'autre part, que le processeur auxiliaire PA1 ou PA2 est sain. De tels moyens de synchronisation sont difficiles à mettre en oeuvre et ne sont plus appropriés aux cahiers des charges actuels ce qui constitue un premier inconvénient.

En outre, compte tenu du nombre de tâches fonctionnelles à exécuter par la carte principale CP du calculateur, il a été proposé de recourir à une carte principale CP comportant deux processeurs principaux PP1, PP2 qui sont reliés entre eux par une liaison de communication principale LP de manière à ce que les tâches fonctionnelles soient exécutées de manière répartie entre les deux processeurs principaux PP1 et PP2 tout en permettant de réaliser plusieurs tâches en parallèle. En outre, chaque processeur principal PP1, PP2 est relié aux processeurs auxiliaires PA1, PA2 par une liaison de communication auxiliaire L11, L12, L21, L22 comme illustré à la figure 2.

Ainsi, pour un programme PROG comportant des tâches fonctionnelles séquencées S1, S2 et S3, les tâches S1 et S3 peuvent être réalisées par le premier processeur principal PP1 tandis que la tâche S2 est réalisée par le deuxième processeur principal PP2. Il s'ensuit qu'il est nécessaire de synchroniser le fonctionnement des deux processeurs principaux PP1, PP2 afin de détecter de manière immédiate un éventuel dysfonctionnement d'un des processeurs principaux PP1, PP2 ou de la liaison de communication principale LP.

En effet, en l'absence de synchronisation, le dysfonctionnement ne peut être observé que tardivement par un dispositif de contrôle de cohérence, ce qui présente un inconvénient. En outre, pour coordonner les deux processeurs principaux PP1, PP2, une liaison DMA selon l'art antérieur ne peut pas être mise en oeuvre car elle n'est adaptée que pour des fonctionnements asynchrones.

Une solution immédiate pour réaliser la coordination consisterait à ce qu'un processeur principal PP1 commande le deuxième processeur principal PP2 selon le principe de « maître-esclave ». Néanmoins, la fiabilité d'une telle solution n'est pas satisfaisante étant donné qu'un dysfonctionnement du processeur « maître » entraînerait directement un dysfonctionnement du processeur « esclave ».

Aussi, il existe un besoin pour assurer la coordination des tâches exécutées par un système embarqué comportant une pluralité de processeurs afin de surveiller de manière fiable et pouvoir basculer sur un système embarqué de secours de manière réactive en cas de dysfonctionnement.

Par ailleurs, on connaît par le document US - 2009/055685 un système comprenant un premier processeur, dont le fonctionnement est surveillé par un second processeur. Ce document antérieur prévoit que le premier processeur réalise un calcul particulier pour calculer et mettre à jour une valeur résultante, ajoute cette valeur résultante à une valeur variable pour obtenir une valeur de somme et transmet cette valeur de somme et des informations relatives à cette valeur variable au second processeur, et que le second processeur soustrait la valeur variable à la valeur de somme et vérifie si la valeur obtenue est correcte.

### PRESENTATION GENERALE DE L'INVENTION

A cet effet, l'invention concerne un procédé de surveillance de l'exécution coordonnée de tâches séquencées par une carte électronique comportant moins un premier processeur et un deuxième processeur synchronisés sur une même horloge de période temporelle déterminée, l'exécution des tâches séquencées étant répartie entre les processeurs, procédé dans lequel :
- sur une période temporelle déterminée, le premier processeur exécute une première tâche séquencée pendant que le deuxième processeur exécute une première tâche accessoire ;
- sur la période temporelle consécutive, le deuxième processeur exécute une deuxième tâche séquencée consécutive à la première tâche séquencée ;
le procédé comportant :
- une étape d'enregistrement dans des moyens de mémoire par le premier processeur d'un premier identificateur caractérisant la période temporelle au cours de laquelle a été exécutée la première tâche séquencée, l'étape d'enregistrement étant réalisée au cours de la période temporelle déterminée après exécution de la première tâche séquencée ;
- une étape d'enregistrement dans les moyens de mémoire par le deuxième processeur d'un deuxième identificateur caractérisant la période temporelle au cours de laquelle a été exécutée la première tâche accessoire, l'étape d'enregistrement étant réalisée au cours de la période temporelle déterminée après exécution de la première tâche accessoire ;
- une étape de comparaison par le premier processeur du premier identificateur et du deuxième identificateur enregistrés dans les moyens de mémoire, l'étape de comparaison étant réalisée au cours de la période temporelle consécutive ; et
- une étape de signalisation par le premier processeur en cas d'échec de la comparaison afin de signaler un défaut de coordination des processeurs.

Grâce au procédé de surveillance selon l'invention, le premier processeur peut garantir que le deuxième processeur exécute la tâche séquencée de manière coordonnée sur la période temporelle déterminée. Ainsi, les tâches séquencées peuvent être exécutées les unes après les autres de manière optimale sans risque d'erreur. De manière avantageuse, le procédé de surveillance permet de détecter un grand nombre de dysfonctionnements liés aux processeurs et/ou aux moyens de mémoire. Par ailleurs, cette détection est réactive car un dysfonctionnement est détecté dans la période temporelle dans laquelle il survient ce qui est avantageux par comparaison à l'art antérieur. Cette réactivité permet lors de la signalisation de transférer les tâches fonctionnelles à une carte électronique de secours qui vient suppléer la carte électronique défaillante et ainsi garantir la fiabilité de l'exécution des tâches fonctionnelles.

De préférence, le premier processeur exécutant une deuxième tâche accessoire sur la période temporelle consécutive, l'étape de comparaison est réalisée au cours de la période temporelle consécutive avant l'exécution de la deuxième tâche accessoire. Ainsi, on détermine de manière réactive au début de la période temporelle consécutive si un défaut de coordination est apparu ce qui est avantageux.

Selon un aspect de l'invention, les tâches accessoires (c'est-à-dire des tâches non nécessairement séquencées) peuvent être des tâches muettes et ne pas comporter d'instructions. Autrement dit, de telles tâches accessoires correspondent à des périodes de repos du processeur.

De manière préférée, la période temporelle consécutive est la période temporelle qui suit directement la période temporelle déterminée mais il va de soi que la période temporelle consécutive pourrait être distante dans le temps de période temporelle déterminée de plusieurs cycles d'horloge.

De préférence, le procédé comporte une étape de comparaison par le deuxième processeur du premier identificateur et du deuxième identificateur enregistrés dans les moyens de mémoire, l'étape de comparaison étant réalisée au cours de la période temporelle consécutive avant l'exécution de la deuxième tâche séquencée et une étape de signalisation par le deuxième processeur en cas d'échec de la comparaison afin de signaler un défaut de coordination des processeurs.

Avantageusement, le deuxième processeur peut garantir que le premier processeur exécute la tâche séquencée au bon moment, en accord avec la synchronisation des processeurs. Autrement dit, les processeurs se surveillent de manière réciproque ce qui améliore la fiabilité de l'exécution des tâches fonctionnelles.

De préférence, les étapes d'enregistrement sont mises en oeuvre directement après l'exécution de la première tâche accessoire et de la première tâche séquencée. Ainsi, les processeurs exécutent les instructions d'enregistrement directement après avoir exécuté les instructions des tâches fonctionnelles pour que les moyens de mémoire comportent l'information la plus récente.

De préférence encore, les étapes du procédé de surveillance sont mises en oeuvre à chaque période temporelle. Ainsi, la carte électronique est surveillée en temps réel au cours du temps, par exemple, pendant toute la durée de vol d'un aéronef comportant ladite carte électronique.

De manière préférée, les identificateurs sont des nombres entiers afin de distinguer les périodes temporelles consécutives.

Selon un aspect préféré de l'invention, les moyens de mémoire se présentent sous la forme d'une mémoire RAM reliée aux deux processeurs. Une telle mémoire RAM est simple à mettre en oeuvre sur une carte électronique et permet de servir d'intermédiaire étant donné que les étapes d'enregistrement peuvent survenir à des instants différents.

De préférence, chaque processeur est relié à la mémoire RAM par une liaison de communication. Lors de la surveillance, tout défaut de la liaison de communication se traduit par un retard ou une déformation des identificateurs et résulte en une signalisation, par exemple, une émission d'une alarme. Autrement dit, le procédé de surveillance est fiable et couvre tout dysfonctionnement de la carte électronique.

Selon des modes de réalisation de l'invention, les moyens de mémoire appartiennent à au moins un des processeurs ou sont indépendants des processeurs.

De manière préférée, la carte électronique étant une carte électronique principale d'un dispositif électronique comprenant au moins deux processeurs principaux synchronisés sur une horloge principale de période temporelle principale déterminée, le dispositif électronique comportant en outre au moins une carte électronique auxiliaire comprenant au moins un processeur auxiliaire synchronisé sur une horloge auxiliaire de période temporelle auxiliaire déterminée, l'horloge auxiliaire étant plus rapide que l'horloge principale, des tâches séquencées devant être réalisées simultanément par un des processeurs principaux et le processeur auxiliaire, procédé dans lequel :
- sur une période temporelle principale déterminée, le premier processeur principal exécute une première tâche séquencée pendant que le processeur auxiliaire exécute des instructions de la première tâche séquencée sur une pluralité de périodes temporelles auxiliaires ;
- sur la période temporelle principale consécutive, le premier processeur principal exécute une deuxième tâche séquencée ;
le procédé comportant :
- une étape d'émission par le premier processeur principal d'un marqueur de coordination au processeur auxiliaire au début de chaque période temporelle principale ;
- une étape d'émission par le processeur auxiliaire d'un mot de réponse formé à partir du dernier marqueur de coordination reçu au premier processeur principal à la fin de chaque période temporelle auxiliaire ;
- une étape de validation par le premier processeur principal du mot de réponse reçu par rapport au premier marqueur de coordination émis, l'étape de validation étant réalisée au début de la période temporelle principale consécutive avant l'émission d'un nouveau marqueur de coordination ; et
- une étape de signalisation par le premier processeur principal si le mot de réponse reçu n'est pas valide afin de signaler un défaut de coordination du processeur auxiliaire.

De manière avantageuse, chaque processeur principal surveille le processeur auxiliaire ce qui garantit une grande fiabilité du procédé. En outre, comme les processeurs principaux se surveillent de manière réciproque, on dispose d'un procédé de surveillance complet et redondé qui permet une détection réactive (par exemple moins de 10 ms) et systématique de tout dysfonctionnement. Le procédé de surveillance est de mise en oeuvre aisée ce qui facilite son implantation et son application à une pluralité de cartes différentes.

De manière préférée, le dispositif électronique comportant au moins deux cartes électroniques auxiliaires, chaque processeur principal de la carte électronique principale surveille la coordination de l'exécution des tâches séquencées par chacun des processeurs auxiliaires. Un tel procédé de surveillance est avantageusement généralisable à plusieurs cartes auxiliaires tout en garantissant le même niveau de fiabilité et le même niveau de complexité.

L'invention est particulièrement avantageuse pour la surveillance d'un dispositif électronique du type calculateur de bord qui est embarqué dans un aéronef.

L'invention concerne en outre un procédé de surveillance de l'exécution coordonnée de tâches séquencées par un dispositif électronique comportant une carte électronique principale comprenant au moins un processeur principal synchronisé sur une horloge principale de période temporelle principale et au moins une carte électronique auxiliaire comprenant au moins un processeur auxiliaire synchronisé sur une horloge auxiliaire de période temporelle auxiliaire, l'horloge auxiliaire étant plus rapide que l'horloge principale, les tâches séquencées devant être réalisées simultanément par les processeurs, procédé dans lequel :
- sur une période temporelle principale déterminée, le processeur principal exécute une première tâche séquencée pendant que le processeur auxiliaire exécute des instructions de la première tâche séquencée sur une pluralité de périodes temporelles auxiliaires ;
- sur la période temporelle principale consécutive, le processeur principal exécute une deuxième tâche séquencée ;
le procédé comportant :
- une étape d'émission par le processeur principal d'un marqueur de coordination au processeur auxiliaire au début de chaque période temporelle principale ;
- une étape d'émission par le processeur auxiliaire d'un mot de réponse formé à partir du dernier marqueur de coordination reçu au processeur principal à la fin de chaque période temporelle auxiliaire ;
- une étape de validation par le processeur principal du mot de réponse reçu par rapport au premier marqueur de coordination émis, l'étape de validation étant réalisée au début de la période temporelle consécutive avant l'émission d'un nouveau marqueur de coordination ; et
- une étape de signalisation par le processeur principal si le mot de réponse reçu n'est pas valide afin de signaler un défaut de coordination du processeur auxiliaire.

Le procédé permet avantageusement au processeur principal de surveiller le processeur auxiliaire de manière simple et réactive, les marqueurs de coordination étant envoyés systématiquement et de manière régulière. Cela est particulièrement avantageux pour deux processeurs asynchrones appartenant à des cartes différentes. Comme la surveillance n'est réalisée que par le processeur principal, la détection d'un dysfonctionnement est très réactive (par exemple moins de 10 ms), le processeur principal étant surveillé par d'autres moyens. Le procédé de surveillance est de mise en oeuvre aisée ce qui facilite son implantation et son application à une pluralité de cartes différentes.

De préférence, l'étape de signalisation comporte une étape d'émission d'une alarme.

De préférence, la carte auxiliaire et la carte principale sont reliées par au moins une liaison de communication auxiliaire. Lors de la surveillance, tout défaut de la liaison de communication se traduit par un retard ou une déformation des marqueurs de coordination et résulte en une émission d'une alarme. Autrement dit, le procédé de surveillance est fiable et couvre tout dysfonctionnement du dispositif électronique.

De préférence encore, la nature du marqueur de coordination est définie en fonction de la topologie de la liaison de communication auxiliaire afin de permettre une mise en évidence d'un défaut courant de ladite liaison de communication auxiliaire, de préférence, un collage de deux bits consécutifs de ladite liaison de communication auxiliaire.

Ainsi, pour une liaison de communication se présentant sous la forme d'un bus de communication comportant 8 fils, le marqueur de coordination est un entier hexadécimal codé sur 32 bits.

De préférence, les marqueurs de coordination sont envoyés de manière alternée afin de distinguer deux périodes temporelles principales. De préférence encore, les marqueurs de coordination envoyés sont au nombre de deux.

Selon un aspect de l'invention, le mot de réponse est le complément du dernier marqueur de coordination reçu. Un tel mot de réponse est, d'une part, simple à former par le processeur auxiliaire et, d'autre part, simple à comparer par le processeur principal. Cela est particulièrement avantageux pour le processeur auxiliaire qui dispose d'une période temporelle auxiliaire de courte durée pour former le mot de réponse.

De manière préférée, le processeur principal ne conserve que le dernier mot de réponse reçu de manière à accélérer le procédé de surveillance.

Selon un aspect préféré, le dispositif électronique comportant deux cartes électroniques auxiliaires comprenant au moins un processeur auxiliaire synchronisé sur une horloge auxiliaire de période temporelle auxiliaire, le processeur principal surveille la coordination de l'exécution de tâches séquencées sur chaque processeur auxiliaire. Ainsi, le nombre de cartes auxiliaires peut être augmenté sans affecter la fiabilité de la surveillance.

Selon un autre aspect préféré, la carte électronique principale comprenant au moins deux processeurs principaux synchronisés sur une même horloge principale de période temporelle principale, chaque processeur principal surveille la coordination de l'exécution de tâches séquencées sur le processeur auxiliaire. Ainsi, chaque processeur auxiliaire est surveillé par deux manières indépendantes, les processeurs principaux pouvant se surveiller réciproquement.

### PRESENTATION DES FIGURES

L'invention sera mieux comprise à la lecture de la description qui va suivre, donnée uniquement à titre d'exemple, et se référant aux dessins annexés sur lesquels :
- la figure 1 est une représentation schématique d'un calculateur selon l'art antérieur avec une carte principale ne comportant qu'un unique processeur principal (déjà commentée) ;
- la figure 2 est une représentation schématique d'un calculateur selon l'art antérieur avec une carte principale comportant deux processeurs principaux (déjà commentée) ;
- la figure 3 est une représentation schématique d'un calculateur selon l'invention avec une carte principale comportant deux processeurs principaux ;
- la figure 4 est un diagramme schématique du procédé de coordination des deux processeurs principaux ;
- la figure 5A est un premier exemple de mise en oeuvre de la coordination des deux processeurs principaux synchronisés ;
- la figure 5B représente l'état de la mémoire RAM lors de la mise en oeuvre du premier exemple de la figure 5A ;
- la figure 6A est un deuxième exemple de mise en oeuvre de la coordination des deux processeurs principaux synchronisés lors d'un défaut de coordination ;
- la figure 6B représente l'état de la mémoire RAM lors de la mise en oeuvre du deuxième exemple de la figure 6A ;
- la figure 7 est un diagramme schématique du procédé de coordination d'un processeur principal avec un processeur auxiliaire ;
- la figure 8 est un premier exemple de mise en oeuvre de la coordination d'un processeur principal avec un processeur auxiliaire ;
- la figure 9 est un deuxième exemple de mise en oeuvre de la coordination d'un processeur principal avec un processeur auxiliaire lors d'un défaut de coordination ; et
- la figure 10 est une représentation schématique d'un calculateur selon l'invention sur lequel sont indiqués les procédés de surveillance mis en oeuvre.

Il faut noter que les figures exposent l'invention de manière détaillée pour mettre en oeuvre l'invention, lesdites figures pouvant bien entendu servir à mieux définir l'invention le cas échéant.

### DESCRIPTION D'UN OU PLUSIEURS MODES DE REALISATION ET DE MISE EN OEUVRE

L'invention va être présentée pour un dispositif électronique qui se présente sous la forme d'un calculateur électronique embarqué à bord d'un aéronef. Il va de soi que l'invention s'applique à tout type de dispositif électronique comportant une pluralité de processeurs de calcul tel que par exemple un dispositif électronique pour une utilisation dans le domaine ferroviaire, la téléphonie mobile, le domaine spatial ou automobile.

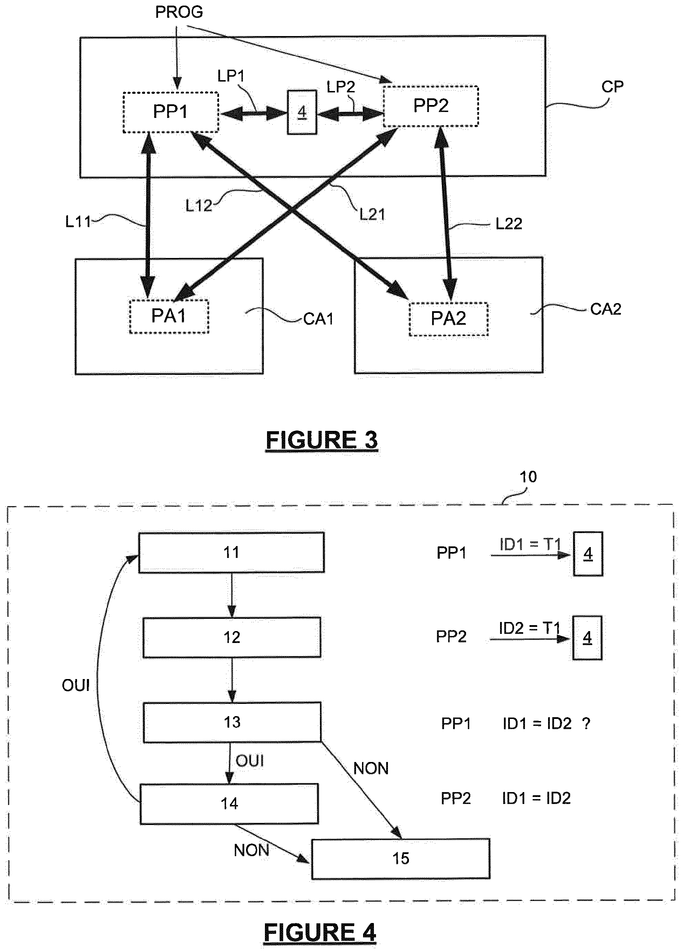

Dans cet exemple, le calculateur comporte une carte de circuit imprimé principale CP et deux cartes de circuit imprimé auxiliaires CA1, CA2 comme illustré à la figure 3. Afin de disposer d'une puissance de calcul importante, la carte principale CP comporte deux processeurs principaux PP1, PP2 afin de réaliser des tâches fonctionnelles en parallèle. Comme cela sera présenté en détails par la suite, les processeurs principaux PP1, PP2 sont reliés par une liaison de communication afin de permettre l'échange de données entre les processeurs PP1, PP2.

Pour sa part, chaque carte auxiliaire CA1, CA2 comporte un processeur auxiliaire PA1, PA2 pour traiter des tâches fonctionnelles fournies par les processeurs principaux PP1, PP2. A cet effet, chaque processeur auxiliaire PA1, PA2 est relié par une liaison de communication auxiliaire L11, L12, L21, L22 à chacun des processeurs principaux PP1, PP2 comme illustré à la figure 3. De manière préférée, les liaisons de communication L11, L12, L21, L22 se présentent sous la forme de bus de communication comportant 8 fils pour la communication de données codées sur 32 bits.

Dans cet exemple de réalisation, les processeurs auxiliaires PA1, PA2 des cartes auxiliaires CA1, CA2 sont adaptés pour gérer les données d'entrée et de sortie du calculateur de vol. Par la suite, les données d'entrée/sortie sont désignées donnée I/O pour données « Input/output ». Par exemple, le processeur PA1, PA2 de la carte auxiliaire CA1, CA2 lit les données issues de l'aéronef et délivre des ordres à des dispositifs de l'aéronef.

Ces tâches fonctionnelles sont définies dans un programme logiciel PROG qui est fourni au calculateur de vol et interprété par les processeurs principaux PP1, PP2 de la carte principale CP. Afin d'augmenter la puissance de calcul et de solliciter équitablement les différents processeurs principaux PP1, PP2, les tâches fonctionnelles sont réparties entre les deux processeurs principaux PP1, PP2 pour leur exécution par la carte électronique principale CP. Ces tâches fonctionnelles comportent un ensemble d'instructions dont une partie peut être confiée à un ou plusieurs processeurs auxiliaires PA1, PA2 pour leur exécution. Les instructions issues d'une tâche fonctionnelle qui sont traitées par un processeur auxiliaire PA1, PA2 sont désignées par la suite instructions fonctionnelles.

Les processeurs principaux PP1, PP2 sont synchronisés sur une même horloge principale H de période temporelle T afin de permettre un enchaînement optimal de l'exécution des tâches fonctionnelles. A titre d'exemple, la période temporelle T de l'horloge principale H est de 5 ms.

Chaque processeur auxiliaire PA1, PA2 est synchronisé sur une horloge auxiliaire H1, H2 de période temporelle t qui est plus rapide que l'horloge principale H. A titre d'exemple, la période temporelle t de chaque horloge auxiliaire H1, H2 est de 500 µs. Autrement dit, chaque processeur auxiliaire PA1, PA2 va 10 fois plus vite qu'un processeur principal PP1, PP2, les processeurs principaux PP1, PP2 et auxiliaires PA1, PA2 étant asynchrones.

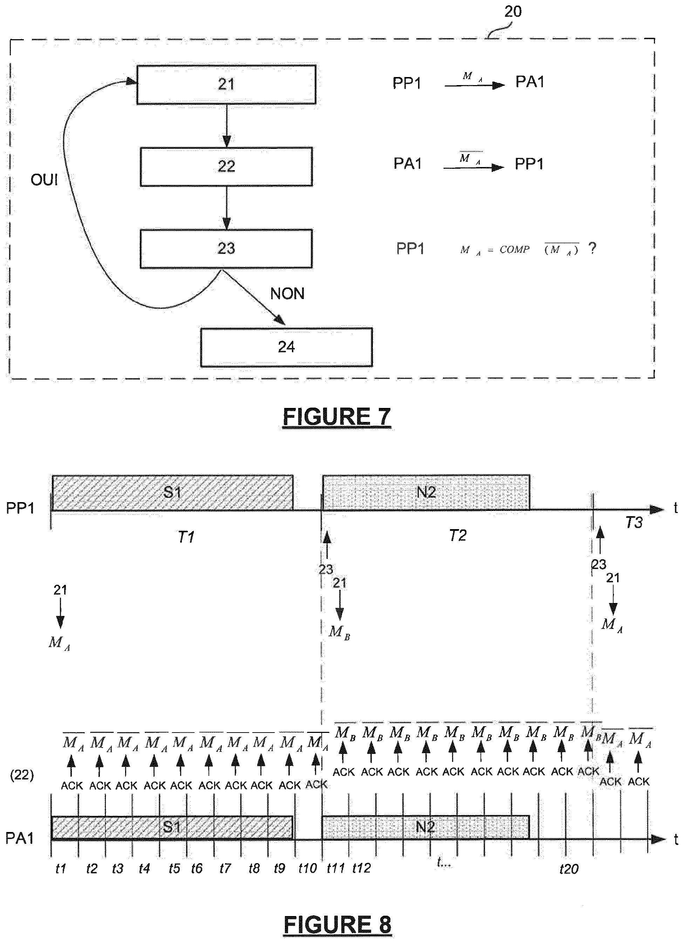

Selon l'invention, la surveillance de la coordination des différents processeurs PP1, PP2, PA1, PA2 est réalisée par :
- un premier procédé de surveillance 10 (Figure 4) dédié à la surveillance de processeurs synchrones et
- un deuxième procédé de surveillance 20 (Figure 7) dédié à la surveillance de processeurs synchrones/asynchrones.

Selon l'invention, le programme logiciel PROG comporte des tâches fonctionnelles S1-S4 qui sont séquencées, c'est-à-dire, qu'elles doivent être exécutées selon une relation d'ordre croissant. En effet, la tâche fonctionnelle S3 peut comporter des paramètres qui doivent être calculés au cours de la tâche fonctionnelle S2.

Comme illustré à la figure 3, la carte électronique principale CP comporte des moyens de mémoire qui se présentent, de manière préférée, sous la forme d'une mémoire RAM 4 reliée aux deux processeurs principaux PP1, PP2 mais il va de soi que les moyens de mémoire peuvent se présenter sous diverses formes, par exemple, sous la forme d'une mémoire interne à un processeur principal PP1, PP2, partagée entre les deux processeurs principaux PP1, PP2 ou une mémoire externe à la carte électronique principale CP. En outre, les moyens de mémoire 4 peuvent se présenter sous la forme d'un bloc mémoire unitaire ou sous la forme d'une pluralité de modules mémoires connectés ou indépendants les uns des autres.

Toujours en référence à la figure 3, dans cette forme de réalisation de l'invention, le premier processeur principal PP1 est relié à la mémoire RAM 4 par une première liaison principale LP1 tandis que le deuxième processeur principal PP2 est relié à la mémoire RAM 4 par une deuxième liaison principale LP2. Les liaisons principales LP1, LP2 se présentent dans cet exemple sous la forme de bus communication comportant 8 fils pour la communication de données codées sur 32 bits.

Dans l'exemple qui va suivre, le programme fonctionnel comporte quatre tâches fonctionnelles séquencées S1-S4 qui doivent être exécutées par le premier processeur principal PP1 à l'exception de la tâche fonctionnelle S2 qui doit être exécutée par le deuxième processeur principal PP2. Les tâches fonctionnelles S1-S4 doivent être respectivement exécutées sur les périodes temporelles T1-T4.

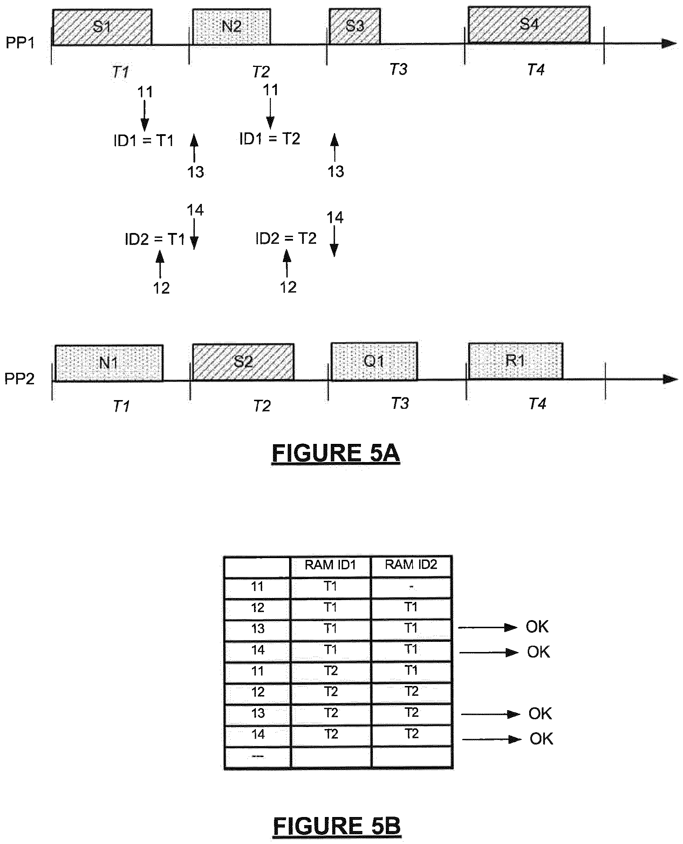

Lorsqu'un processeur principal PP1, PP2 n'est pas occupé par l'exécution d'une des tâches fonctionnelles séquencées S1-S4, celui-ci exécute des tâches accessoires (ou tâches de fond) N1, N2, Q1, R1 comme illustré à la figure 5A. Ces tâches accessoires peuvent consister, par exemple, à l'exécution de tâches cycliques ou des tâches fonctionnelles qui n'ont pas de contrainte de séquencement.

Les tâches accessoires peuvent être des tâches muettes et ne pas comporter d'instructions. Selon cette dernière hypothèse, de telles tâches accessoires correspondent à des périodes de repos du processeur.

### Premier procédé de surveillance 10

Grâce au premier procédé de surveillance 10 selon l'invention, la coordination de l'exécution des tâches fonctionnelles séquencées S1-S4 par les processeurs principaux PP1, PP2 est assurée.

En référence à la figure 5A, sur la période temporelle déterminée T1, le premier processeur principal PP1 exécute une première tâche séquencée S1 pendant que le deuxième processeur PP2 exécute une première tâche accessoire N1. Sur la période temporelle consécutive T2, le premier processeur principal PP1 exécute une deuxième tâche accessoire N2 pendant que le deuxième processeur principal PP2 exécute une deuxième tâche séquencée S2 consécutive à la première tâche séquencée S1.

Selon l'invention, en référence à la figure 4, le procédé comporte une étape d'enregistrement 11 dans la mémoire RAM 4 par le premier processeur principal PP1 d'un premier identificateur ID1 caractérisant la période temporelle T1 au cours de laquelle a été exécutée la première tâche séquencée S1. Dans cet exemple, le premier identificateur ID1 correspond à la référence de la période temporelle concernée (ID1=T1). Il va de soi que l'identificateur pourrait correspondre à toute information relative à la période temporelle concernée (nom de période temporelle, référence relative ou absolue, etc.).

Comme illustré à la figure 5A, l'étape d'enregistrement 11 est réalisée au cours de la période temporelle déterminée T1, après exécution de la première tâche séquencée S1. Cette étape d'enregistrement 11 se présente dans cet exemple sous la forme d'une étape d'écriture par le premier processeur principal PP1 dans la mémoire RAM 4. Dans cet exemple, en référence à la figure 5B, la mémoire RAM 4 comporte un espace mémoire dédié au premier identificateur ID1 dans lequel vient écrire le premier processeur principal PP1 via la première liaison de communication principale LP1.

De manière similaire, en référence à la figure 4, le procédé comporte une étape d'enregistrement 12 dans la mémoire RAM 4 par le deuxième processeur principal PP2 d'un deuxième identificateur ID2 caractérisant la période temporelle T1 au cours de laquelle a été exécutée la première tâche accessoire N1. Comme illustré à la figure 5A, l'étape d'enregistrement 12 est réalisée au cours de la période temporelle déterminée T1 après exécution de la première tâche accessoire N1. De manière similaire, le deuxième identificateur ID2 correspond à la référence de la période temporelle concernée (ID2=T1).

Cette étape d'enregistrement 12 se présente dans cet exemple sous la forme d'une étape d'écriture par le deuxième processeur principal PP2 dans la mémoire RAM 4. De manière similaire, en référence à la figure 5B, la mémoire RAM 4 comporte un espace mémoire dédié au deuxième identificateur ID2 dans lequel vient écrire le deuxième processeur principal PP2 via la deuxième liaison de communication principale LP2.

De manière préférée, les identificateurs ID1, ID2 sont des entiers codés sur 32 bits et prennent des valeurs comprises entre 1 et 24 ce qui est suffisant pour assurer la différenciation de deux périodes temporelles consécutives T1, T2. Néanmoins, il va de soi que les identificateurs ID1, ID2 pourraient prendre des valeurs différentes.

Les instants d'exécution des étapes d'enregistrement 11, 12 dépendent de la durée d'exécution de la tâche fonctionnelle sur la période temporelle concernée. Ainsi, en référence à la figure 5A, l'étape d'écriture 12 sur la période temporelle T1 est plus précoce que l'étape d'écriture 11 sur la période temporelle T2.

Toujours en référence à la figure 4, le procédé comporte une étape de comparaison 13 par le premier processeur principal PP1 du premier identificateur ID1 et du deuxième identificateur ID2 enregistrés dans la mémoire RAM 4. L'étape de comparaison 13 est réalisée au cours de la période temporelle consécutive T2 avant l'exécution de la deuxième tâche accessoire N2 par le premier processeur principal PP1 de manière à éviter tout décalage temporel entre les deux processeurs principaux PP1, PP2.

En outre, la deuxième tâche accessoire N2 ne débute que lorsque l'étape de comparaison 13 est terminée de manière à tenir compte des délais de communication entre le premier processeur principal PP1 et la mémoire RAM 4.

En référence aux figures 5A et 5B, lors de l'étape de comparaison 13, les espaces mémoire dédiées aux identificateurs ID1, ID2 de la mémoire RAM 4 sont lus par le premier processeur principal PP1 puis comparés entre eux. Si les identificateurs ID1, ID2 ne sont pas égaux, le procédé comporte une étape de signalisation 15, de préférence, une émission d'une alarme ALARME par le premier processeur principal PP1 pour signaler un défaut de coordination des processeurs principaux PP1, PP2. Toujours en référence aux figures 5A et 5B, comme les identificateurs ID1, ID2 valent tous les deux T1, aucune alarme n'est émise.

En référence à la figure 4, le procédé comporte une étape de comparaison 14 par le deuxième processeur principal PP2 du premier identificateur ID1 et du deuxième identificateur ID2 enregistrés dans les moyens de mémoire 4. De manière similaire, l'étape de comparaison 14 est réalisée au cours de la période temporelle consécutive T2 avant l'exécution de la deuxième tâche séquencée S2 par le deuxième processeur principal PP2 et une alarme est émise 15 par le deuxième processeur principal PP2 pour signaler un défaut de coordination des processeurs principaux PP1, PP2 si les identificateurs ID1, ID2 ne sont pas égaux.

Si aucun défaut de coordination n'est apparu, de nouvelles étapes d'enregistrement 11, 12 surviennent suite à l'exécution des tâches fonctionnelles N2, S2 par les processeurs principaux PP1, PP2 comme illustré à la figure 5A. Pour une tâche accessoire muette, c'est-à-dire, dénuée d'instructions, l'étape d'enregistrement est directement réalisée suite à l'étape de comparaison.

L'exemple des figures 5A et 5B illustre une exécution coordonnée des tâches fonctionnelles séquencées S1-S4, les étapes de comparaison 13, 14 vérifiant que les processeurs principaux PP1, PP2 exécutent leurs tâches au cours du même instant temporel T1-T4. A cet effet, aucune alarme n'est émise.

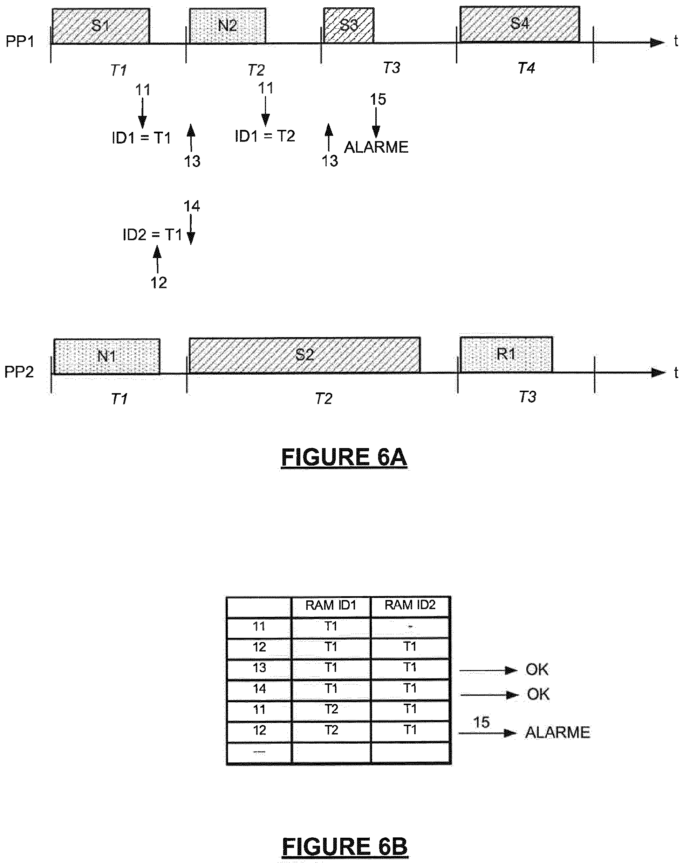

L'exemple des figures 6A et 6B illustre une exécution des tâches fonctionnelles séquencées S1-S4 sur les périodes temporelles T1-T4 au cours desquelles survient un dysfonctionnement. Dans cet exemple, le deuxième processeur principal PP2 exécute la première tâche accessoire N1 au cours de la première période temporelle T1 et enregistre son deuxième indicateur ID2=T1 dans la mémoire RAM 4 (Étape d'enregistrement 12). Ensuite, le deuxième processeur principal PP2 exécute la deuxième tâche séquencée S2 au cours de la deuxième période temporelle T2. Du fait d'un dysfonctionnement, la durée de la période temporelle T2 est allongée comme illustré à la figure 6A. Il en résulte que le premier processeur principal PP1 exécute sa deuxième tâche accessoire N2 de manière plus rapide que la deuxième tâche séquencée S2.

A la fin de la tâche accessoire N2, le premier processeur principal PP1 écrit le premier identificateur ID1=T2 dans la mémoire RAM 4 (Étape d'enregistrement 11). Au début de la troisième période temporelle T3, avant l'exécution de la troisième tâche séquencée S3 par le premier processeur principal PP1, le premier processeur principal PP1 compare le premier identificateur ID1 et le deuxième identificateur ID2 enregistrés dans la mémoire RAM 4 (Étape de comparaison 13). En référence à la figure 6B, le premier identificateur ID1 de valeur T2 et le deuxième identificateur ID2 de valeur T1 ne sont pas égaux. Il en résulte qu'une alarme est émise immédiatement par le processeur principal PP1 pour signifier un défaut de coordination. Ainsi, l'alarme est émise dès la première période temporelle T1 ce qui garantit une surveillance réactive. De manière avantageuse, on peut basculer sur un dispositif électronique de secours avant même qu'un défaut de commande ne soit observé.

L'alarme peut se présenter sous diverses formes, par exemple, un signal visuel ou sonore, une commande de secours, une commande de basculement sur un autre dispositif embarqué, etc.

Ainsi, de manière avantageuse, le premier processeur principal PP1 et le deuxième processeur principal PP2 se surveillent de manière réciproque pour détecter toute désynchronisation temporelle des processeurs PP1, PP2, tout défaut de coordination de l'exécution des tâches fonctionnelles, tout défaut de vivacité des processeurs principaux (arrêt du processeur, arrêt de l'exécution de la tâche fonctionnelle). En outre, tout défaut des liens de communication principaux LP1, LP2 entre les processeurs principaux PP1, PP2 ou de la mémoire RAM 4 est immédiatement détecté ce qui est également avantageux.

### Deuxième procédé de surveillance 20

Comme indiqué précédemment, le programme logiciel PROG comporte des tâches fonctionnelles S1-S4 qui sont séquencées, c'est-à-dire, qu'elles doivent être exécutées selon une relation d'ordre croissant.

Lorsqu'une tâche fonctionnelle S1-S4 est réalisée par un des processeurs principaux PP1, PP2, le processeur principal concerné peut sous-traiter des instructions de la tâche fonctionnelle concernée à un processeur auxiliaire PA1, PA2. Pour améliorer la réactivité de traitement, les processeurs auxiliaires PA1, PA2 et les processeurs principaux PP1, PP2 sont asynchrones.

Grâce au procédé de surveillance selon l'invention qui va être présenté par la suite, la coordination de l'exécution des tâches fonctionnelles séquencées S1-S4 est assurée entre un processeur principal PP1, PP2 et un processeur auxiliaire PA1, PA2.

A titre d'exemple, en référence aux figures 7 à 9, la surveillance de la coordination entre le premier processeur principal PP1 et le premier processeur auxiliaire PA1 va être présentée pour le traitement des tâches fonctionnelles séquencées S1, N2. Chaque tâche fonctionnelle S1, N2 comporte respectivement des instructions fonctionnelles s1, n2 qui doivent être exécutées de manière coordonnée par le premier processeur auxiliaire PA1.

Comme les processeurs principaux PP1, PP2 et les processeurs auxiliaires PA1, PA2 ne sont pas synchrones, le premier procédé de surveillance 10 présenté précédemment en référence à la figure 4 ne peut pas être mis en oeuvre.

En référence à la figure 8, sur la période temporelle déterminée T1 de durée 5 ms, le premier processeur principal PP1 exécute une première tâche séquencée S1 pendant que le premier processeur auxiliaire PA1 exécute des premières instructions fonctionnelles s1 sur une dizaine de périodes temporelles auxiliaires t1-t10 de durée individuelle 500 µs.

Sur la période temporelle consécutive T2, le premier processeur principal PP1 exécute une deuxième tâche accessoire N2 pendant que le premier processeur auxiliaire PA1 exécute des deuxièmes instructions accessoires n2 sur une dizaine de durées temporelles t11-t20.

Selon l'invention, en référence aux figures 7 et 8, le procédé comporte une étape d'émission 21 par le premier processeur principal PP1 d'un marqueur de coordination M_{A}, M_{B} au premier processeur auxiliaire PA1 au début de chaque période temporelle principale T1-T2. Dans cet exemple, le premier processeur principal PP1 émet un premier marqueur de coordination M_{A} via la ligne de communication auxiliaire L11 au premier processeur auxiliaire PA1 au début de la période temporelle principale T1.

Suite à l'émission du premier marqueur de coordination M_{A}, le procédé comporte une étape d'émission 22 par le premier processeur auxiliaire PA1 d'un mot de réponse ACK formé à partir du dernier marqueur de coordination reçu M_{A}. Le mot de réponse ACK est envoyé au premier processeur principal PP1 à la fin de chaque période temporelle auxiliaire t1-t10. Ainsi, comme illustré à la figure 8, au cours de la période temporelle principale T1, dix mots de réponse ACK sont envoyés par le premier processeur auxiliaire PA1.

De manière préférée, le mot de réponse ACK est le complémentaire du dernier marqueur de coordination reçu M_{A} reçu. Autrement dit, le mot de réponse ACK est égal à *M̅_̅{̅A̅}̅* comme illustré à la figure 8.

De préférence, le processeur principal PP1 ne conserve que le dernier mot de réponse ACK reçu. Autrement dit, le dernier mot de réponse ACK reçu écrase le mot de réponse reçu précédemment.

Suite à l'émission du mot de réponse ACK, le procédé comporte une étape de validation 23 par le premier processeur principal PP1 du mot de réponse ACK reçu par rapport au premier marqueur de coordination M_{A} émis, l'étape de validation 23 étant réalisée au début de la période temporelle consécutive T2 avant l'émission d'un nouveau marqueur de coordination M_{B}. Ainsi, le premier processeur principal PP1 contrôle la cohérence du mot de réponse reçu ACK afin de s'assurer que la liaison de communication L11 et le premier processeur auxiliaire PA1 ne sont pas défaillants et ne « déforment » pas le marqueur de coordination M_{A} initialement envoyé par le premier processeur principal PP1.

Enfin, le procédé comporte une étape de signalisation 24, de préférence, une émission d'une alarme par le premier processeur principal PP1 si le mot de réponse reçu ACK n'est pas valide afin de signifier un défaut de coordination entre le premier processeur principal PP1 et le premier processeur auxiliaire PA1.

Dans cet exemple, en référence à la figure 8, au début de la période temporelle consécutive T2, le premier processeur principal PP1 vérifie que le mot de réponse reçu ACK est bien le complémentaire du premier marqueur de coordination M_{A} initialement envoyé. Comme cela est le cas dans l'exemple de la figure 8, aucune alarme n'est émise. Aussi, un nouveau marqueur de coordination M_{B} est envoyé par le premier processeur principal PP1 au début de la deuxième période temporelle T2 et une pluralité de mots de réponse ACK (*M̅_̅{̅B̅}̅*) sont envoyés par le premier processeur auxiliaire PA1. En s'assurant que les marqueurs de coordination M_{A}, M_{B} sont bien reçus, le premier processeur principal PP1 peut vérifier l'intégrité du premier processeur auxiliaire PA1 ainsi que l'intégrité de la liaison de communication auxiliaire L11.

Dans cet exemple, chaque liaison de communication auxiliaire L11, L12, L21, L22 se présente sous la forme d'une liaison BUS avec 8 fils pour la communication de donnés codées sur 32bits.

De manière préférée, les marqueurs de coordination M_{A}, M_{B} sont au nombre de deux et sont émis de manière alternée au début des périodes temporelles principales T1, T2. La nature intrinsèque des marqueurs de coordination M_{A}, M_{B} est définie de manière à permettre de détecter un défaut de transmission de bits des marqueurs de coordination M_{A}, M_{B}. En outre, les deux marqueurs de coordination M_{A}, M_{B} sont définis l'un par rapport à l'autre pour favoriser l'identification de défaut de transmission. De manière préférée, les marqueurs de coordination M_{A} et M_{B} sont définis de manière à permettre la détection d'un défaut déterminé, par exemple, le collage de deux bits consécutifs.

De tels marqueurs de coordination M_{A}, M_{B} sont liés à la topologie de bus de communication et permettent de vérifier avec pertinence tout défaut du type collage de bits pour chaque liaison de communication auxiliaire L11, L12, L21, L22. De manière préférée, le procédé met en oeuvre plus de deux marqueurs de coordination différents afin de permettre une vérification précise et rapide de l'ensemble des fils des liaisons de communication auxiliaire L11, L12, L21, L22.

De manière avantageuse, le deuxième procédé de surveillance 20 est souple à mettre en oeuvre car il ne cherche pas à mesurer que l'ensemble des mots de réponse ACK ont bien été reçus par le premier processeur principal PP1 mais uniquement que les tâches qui sont exécutées sont bien coordonnées. A cet effet, il est nécessaire que la période temporelle auxiliaire t1-t20 soit plus courte qu'une période temporelle principale T1.

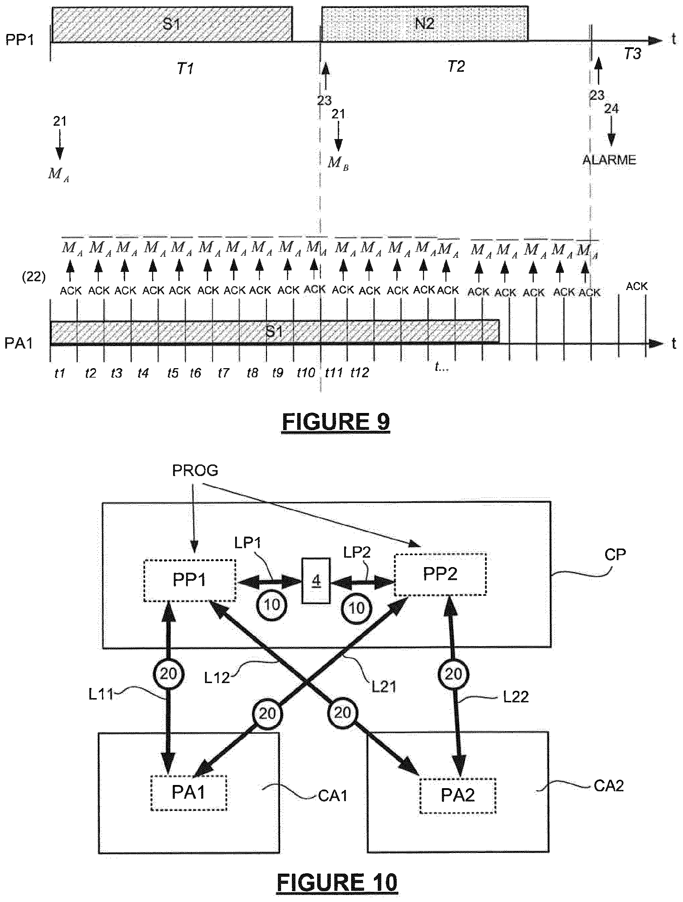

En référence maintenant à l'exemple de la figure 9, le premier processeur auxiliaire PA1 subit un dysfonctionnement qui l'empêche de recevoir le deuxième marqueur de coordination M_{B} au début de la deuxième période temporelle principale T2. Il en résulte que le premier processeur auxiliaire PA1 continue à émettre le complémentaire du premier marqueur de coordination *M̅_̅{̅A̅}̅* comme mot de réponse ACK au lieu d'émettre le complémentaire du premier marqueur de coordination *M̅_̅{̅B̅}̅.*

Ainsi, lors de l'étape de comparaison 23 au début de la troisième période temporelle principale T3, le premier processeur principal PP1 compare le dernier marqueur de coordination envoyé M_{B} et le dernier mot de réponse *M̅_̅{̅A̅}̅* reçu. Comme le mot de réponse *M̅_̅{̅A̅}̅* n'est pas le complémentaire du dernier marqueur de coordination envoyé M_{B}, le procédé émet une alarme pour signifier un défaut de coordination.

Ainsi, l'alarme est émise dès le début de la troisième période temporelle T3 ce qui garantit une surveillance réactive. De manière avantageuse, on peut basculer sur un dispositif électronique de secours avant même qu'un défaut de commande ne soit observé.

Ainsi, de manière avantageuse, le premier processeur principal PP1 surveille le premier processeur auxiliaire PA1 ainsi que la liaison de communication L11 reliant le premier processeur principal PP1 au premier processeur auxiliaire PA1 pour détecter toute défaut de coordination temporelle des processeurs PP1, PA1, tout défaut de coordination de l'exécution des tâches fonctionnelles, tout défaut de vivacité des processeurs (arrêt du processeur, arrêt de l'exécution de la tâche fonctionnelle). Ainsi, le processeur ayant la période temporelle la plus longue peut surveiller le processeur ayant la période temporelle la plus courte.

De manière préférée, le deuxième procédé de surveillance 20 comporte une phase préliminaire d'initialisation au cours de laquelle le processeur principal PP1 émet un marqueur d'initialisation et reçoit en réponse le marqueur complémenté.

### Surveillance globale du dispositif

De manière avantageuse, le dispositif considéré dans son ensemble avec sa carte électronique principale CP et ses cartes auxiliaires CA1, CA2 est surveillé de manière précise et réactive par les procédés de surveillances détaillés précédemment.

Ainsi, grâce au deuxième procédé de surveillance 20, chaque processeur auxiliaire PA1, PA2 est surveillé par chacun des processeurs principaux PP1, PP2 ce qui améliore la fiabilité de la surveillance pour la coordination de l'exécution de tâches fonctionnelles sur des processeurs asynchrones ou synchronisés. Le deuxième procédé de surveillance 20 garantit en outre l'intégrité des liaisons de communication auxiliaires L11, L12, L21, L22 entre chaque processeur principal PP1, PP2 et chaque processeur auxiliaire PA1, PA2.

Le deuxième procédé de surveillance permet au processeur ayant la période temporelle la plus longue (processeur principal) de surveiller le processeur ayant la période temporelle la plus courte (processeur auxiliaire). Cela ne présente pas d'inconvénients dans la présente invention compte tenu du fait que les processeurs principaux PP1, PP2 se surveillent mutuellement. Aussi, chacun des processeurs est au moins surveillé par un autre processeur ce qui garantit une fiabilité de la surveillance du calculateur.

De manière incidente, le deuxième procédé de surveillance 20 est également applicable pour coordonner deux processeurs synchronisés. Selon cette hypothèse, uniquement un mot de réponse est transmis par cycle d'horloge.

Le premier procédé de surveillance 10 permet d'assurer une surveillance réciproque de la coordination des processeurs principaux PP1, PP2 qui sont synchronisés ainsi que de l'intégrité des liaisons de communication principales LP1, LP2.

Ainsi, l'ensemble des processeurs peut être entièrement surveillé pour une carte comportant au moins trois processeurs divers ou au moins deux processeurs synchronisés ce qui confère une fiabilité importante à la carte électronique.

Le premier procédé de surveillance 10 est particulièrement adapté pour surveiller un lien en série comportant deux fils de communication qui s'étend entre deux processeurs afin de détecter une coupure ou un collage de bits. Le deuxième procédé de surveillance 20 est particulièrement adapté pour surveiller l'intégrité d'un lien de communication en parallèle comportant plus de deux fils de communication.

Pour surveiller l'intégrité des calculs des processeurs, les deux procédés de surveillance 10, 20 réalisent de manière avantageuse une étape de comparaison qui est directe pour le premier procédé de surveillance 10 ou indirecte pour le deuxième procédé de surveillance 20 en raison du calcul du mot de réponse (complément).

Du fait de la mise en oeuvre de procédés de surveillance 10, 20, d'une part, pour des processeurs synchronisés et, d'autre part, pour des processeurs asynchrones, on surveille de manière optimale le calculateur.

Il va de soi que l'invention concerne une carte principale CP qui comporte plus de deux processeurs principaux ainsi que des cartes auxiliaires qui comportent plus d'un processeur auxiliaire. En effet, les deux procédés permettent de résoudre d'une part la coordination entre des processeurs synchronisés mais également la coordination entre des processeurs non synchronisés. Les procédés de coordination sont donc généralisables à une carte comportant un nombre quelconque de processeurs principaux et un nombre quelconques de processeurs auxiliaires.

## Revendications

1. Procédé de surveillance de l'exécution coordonnée de tâches séquencées (S1, S2, S3, S4) par une carte électronique (CP) comportant au moins un premier processeur (PP1) et un deuxième processeur (PP2) synchronisés sur une même horloge (H) de période temporelle déterminée (T), l'exécution des tâches séquencées (S1, S2, S3, S4) étant répartie entre les processeurs (PP1, PP2), procédé dans lequel :
- sur une période temporelle déterminée (T1), le premier processeur (PP1) exécute une première tâche séquencée (S1) pendant que le deuxième processeur (PP2) exécute une première tâche accessoire (N1) ;
- sur la période temporelle consécutive (T2), le deuxième processeur (PP2) exécute une deuxième tâche séquencée (S2) consécutive à la première tâche séquencée (S1) ;
ledit procédé comportant
- une étape d'enregistrement (11) dans des moyens de mémoire (4) par le premier processeur (PP1) d'un premier identificateur (ID1) caractérisant la période temporelle (T1) au cours de laquelle a été exécutée la première tâche séquencée (S1), l'étape d'enregistrement (11) étant réalisée au cours de la période temporelle déterminée (T1) après exécution de la première tâche séquencée (S1) ;
**caractérisé par**
- une étape d'enregistrement (12) dans les moyens de mémoire (4) par le deuxième processeur (PP2) d'un deuxième identificateur (ID2) caractérisant la période temporelle (T1) au cours de laquelle a été exécutée la première tâche accessoire (N1), l'étape d'enregistrement (12) étant réalisée au cours de la période temporelle déterminée (T1) après exécution de la première tâche accessoire (N1) ;
- une étape de comparaison (13) par le premier processeur (PP1) du premier identificateur (ID1) et du deuxième identificateur (ID2) enregistrés dans les moyens de mémoire (4), l'étape de comparaison (13) étant réalisée au cours de la période temporelle consécutive (T2) ; et
- une étape de signalisation (15) par le premier processeur (PP1) en cas d'échec de la comparaison afin de signaler un défaut de coordination des processeurs (PP1, PP2).

2. Procédé de surveillance selon la revendication 1, dans lequel, le premier processeur (PP1) exécutant une deuxième tâche accessoire (N2) sur la période temporelle consécutive (T2), l'étape de comparaison (13) est réalisée au cours de la période temporelle consécutive (T2) avant l'exécution de la deuxième tâche accessoire (N2).

3. Procédé de surveillance selon l'une des revendications 1 à 2, dans lequel le procédé comporte :
- une étape de comparaison (14) par le deuxième processeur (PP2) du premier identificateur (ID1) et du deuxième identificateur (ID2) enregistrés dans les moyens de mémoire (4), l'étape de comparaison (14) étant réalisée au cours de la période temporelle consécutive (T2) avant l'exécution de la deuxième tâche séquencée (S2) ; et
- une étape de signalisation (15) par le deuxième processeur (PP2) en cas d'échec de la comparaison afin de signaler un défaut de coordination des processeurs (PP1, PP2).

4. Procédé de surveillance selon l'une des revendications 1 à 3, dans lequel, les étapes d'enregistrement (11, 12) sont mises en oeuvre directement après l'exécution de la première tâche accessoire (N1) et de la première tâche séquencée (S1).

5. Procédé de surveillance selon l'une des revendications 1 à 4, dans lequel, les étapes du procédé de surveillance sont mises en oeuvre à chaque période temporelle (T1, T2).

6. Procédé de surveillance selon l'une des revendications 1 à 5, dans lequel les moyens de mémoire (4) se présentent sous la forme d'une mémoire RAM (4) reliée aux deux processeurs (PP1, PP2).

7. Procédé de surveillance selon l'une des revendications 1 à 5, dans lequel les moyens de mémoire (4) sont indépendants des processeurs (PP1, PP2).

8. Procédé de surveillance selon l'une des revendications 1 à 6, dans lequel les moyens de mémoire (4) appartiennent à au moins un des processeurs (PP1, PP2).

9. Procédé de surveillance selon l'une des revendications 1 à 8 dans lequel, la carte électronique (CP) étant une carte électronique principale (CP) d'un dispositif électronique comprenant au moins deux processeurs principaux (PP1, PP2) synchronisés sur une horloge principale (H) de période temporelle principale déterminée (T), le dispositif électronique comportant en outre au moins une carte électronique auxiliaire (CA1, CA2) comprenant au moins un processeur auxiliaire (PA1, PA2) synchronisé sur une horloge auxiliaire (H1, H2) de période temporelle auxiliaire déterminée (t), l'horloge auxiliaire (H1, H2) étant plus rapide que l'horloge principale (H), des tâches séquencées (S1, S2, S3, S4) devant être réalisées simultanément par un des processeurs principaux (PP1, PP2) et le processeur auxiliaire (PA1, PA2), procédé dans lequel :
- sur une période temporelle principale déterminée (T1), le premier processeur principal (PP1) exécute une première tâche séquencée (S1) pendant que le processeur auxiliaire (PA1, PA2) exécute des instructions (s1) de la première tâche séquencée (S1) sur une pluralité de périodes temporelles auxiliaires (t1-t10)
- sur la période temporelle principale consécutive (T2), le premier processeur principal (PP1, PP2) exécute une deuxième tâche séquencée (S2) ;
procédé **caractérisé en ce qu'**il comporte
- une étape d'émission (21) par le premier processeur principal (PP1, PP2) d'un marqueur de coordination (M_{A}) au processeur auxiliaire (PA1, PA2) au début de chaque période temporelle principale (T1-T2) ;
- une étape d'émission (22) par le processeur auxiliaire (PA1, PA2) d'un mot de réponse (ACK) formé à partir du dernier marqueur de coordination reçu (M_{A}) au premier processeur principal (PP1, PP2) à la fin de chaque période temporelle auxiliaire (t1-t10) ;
- une étape de validation (23) par le premier processeur principal (PP1, PP2) du mot de réponse (ACK) reçu par rapport au premier marqueur de coordination (M_{A}) émis, l'étape de validation (23) étant réalisée au début de la période temporelle principale consécutive (T2) avant l'émission d'un nouveau marqueur de coordination (M_{B}) ; et
- une étape de signalisation (25) par le premier processeur principal (PP1, PP2) si le mot de réponse reçu (ACK) n'est pas valide afin de signaler un défaut de coordination du processeur auxiliaire (PA1, PA2).

10. Procédé de surveillance selon la revendication précédente dans lequel, le dispositif électronique comportant au moins deux cartes électroniques auxiliaires (CA1, CA2), chaque processeur principal (PP1, PP2) de la carte électronique principale (CP) surveille la coordination de l'exécution des tâches séquencées (S1, S2, S3, S4) par chacun des processeurs auxiliaires (PA1, PA2).

## Patentansprüche

1. Verfahren zur Überwachung der koordinierten Ausführung von sequenzierten Aufgaben (S1, S2, S3, S4) durch eine elektronische Karte (CP), die mindestens einen ersten Prozessor (PP1) und einen zweiten Prozessor (PP2) umfasst, welche auf eine selbe Uhr (H) mit einer bestimmten Zeitperiode (T) synchronisiert sind, wobei die Ausführung der sequenzierten Aufgaben (S1, S2, S3, S4) zwischen den Prozessoren (PP1, PP2) verteilt ist, wobei bei dem Verfahren:
- über eine bestimmte Zeitperiode (T1) der erste Prozessor (PP1) eine erste sequenzierte Aufgabe (S1) ausführt, während der zweite Prozessor (PP2) eine erste Nebenaufgabe (N1) ausführt;
- über die folgende Zeitperiode (T2) der zweite Prozessor (PP2) eine zweite sequenzierte Aufgabe (S2) ausführt, die der ersten sequenzierten Aufgabe (S1) folgt;
wobei das Verfahren umfasst
- einen Schritt des Aufzeichnens (11), durch den ersten Prozessor (PP1) in Speichermitteln (4), einer ersten Kennung (ID1), welche die Zeitperiode (T1) kennzeichnet, in deren Verlauf die erste sequenzierte Aufgabe (S1) ausgeführt wurde, wobei der Schritt des Aufzeichnens (11) im Verlauf der bestimmten Zeitperiode (T1) nach Ausführen der ersten sequenzierten Aufgabe (S1) ausgeführt wird;
**gekennzeichnet durch**
- einen Schritt des Aufzeichnens (12), durch den zweiten Prozessor (PP2) in den Speichermitteln (4), einer zweiten Kennung (ID2), welche die Zeitperiode (T1) kennzeichnet, in deren Verlauf die erste Nebenaufgabe (N1) ausgeführt wurde, wobei der Schritt des Aufzeichnens (12) im Verlauf der bestimmten Zeitperiode (T1) nach Ausführen der ersten Nebenaufgabe (N1) ausgeführt wird;
- einen Schritt des Vergleichens (13), durch den ersten Prozessor (PP1), der ersten Kennung (ID1) und der zweiten Kennung (ID2), die in den Speichermitteln (4) aufgezeichnet sind, wobei der Schritt des Vergleichens (13) im Verlauf der folgenden Zeitperiode (T2) ausgeführt wird; und
- einen Schritt des Signalisierens (15), durch den ersten Prozessor (PP1) im Falle eines Fehlschlags des Vergleichs, um eine Koordinationsstörung der Prozessoren (PP1, PP2) zu signalisieren.

2. Verfahren zur Überwachung nach Anspruch 1, wobei der Schritt des Vergleichens (13), da der erste Prozessor (PP1) eine zweite Nebenaufgabe (N2) über die folgende Zeitperiode (T2) ausführt, im Verlauf der folgenden Zeitperiode (T2) vor dem Ausführen der zweiten Nebenaufgabe (N2) ausgeführt wird.

3. Verfahren zur Überwachung nach einem der Ansprüche 1 bis 2, wobei das Verfahren umfasst:
- einen Schritt des Vergleichens (14), durch den zweiten Prozessor (PP2), der ersten Kennung (ID1) und der zweiten Kennung (ID2), die in den Speichermitteln (4) aufgezeichnet sind, wobei der Schritt des Vergleichens (14) im Verlauf der folgenden Zeitperiode (T2) vor dem Ausführen der zweiten sequenzierten Aufgabe (S2) ausgeführt wird; und
- einen Schritt des Signalisierens (15), durch den zweiten Prozessor (PP2) im Falle eines Fehlschlags des Vergleichs, um eine Koordinationsstörung der Prozessoren (PP1, PP2) zu signalisieren.

4. Verfahren zur Überwachung nach einem der Ansprüche 1 bis 3, wobei die Aufzeichnungsschritte (11, 12) direkt nach dem Ausführen der ersten Nebenaufgabe (N1) und der ersten sequenzierten Aufgabe (S1) umgesetzt werden.

5. Verfahren zur Überwachung nach einem der Ansprüche 1 bis 4, wobei die Schritte des Überwachungsverfahrens bei jeder Zeitperiode (T1, T2) umgesetzt werden.

6. Verfahren zur Überwachung nach einem der Ansprüche 1 bis 5, wobei sich die Speichermittel (4) in der Form eines RAM-Speichers (4) darstellen, der an die zwei Prozessoren (PP1, PP2) angeschlossen ist.

7. Verfahren zur Überwachung nach einem der Ansprüche 1 bis 5, wobei die Speichermittel (4) von den Prozessoren (PP1, PP2) unabhängig sind.

8. Verfahren zur Überwachung nach einem der Ansprüche 1 bis 6, wobei die Speichermittel (4) zu mindestens einem der Prozessoren (PP1, PP2) gehören.

9. Verfahren zur Überwachung nach einem der Ansprüche 1 bis 8, wobei die elektronische Vorrichtung, da die elektronische Karte (CP) eine elektronische Hauptkarte (CP) einer elektronischen Vorrichtung ist, welche mindestens zwei Hauptprozessoren (PP1, PP2) umfasst, die auf eine Hauptuhr (H) von bestimmter Haupt-Zeitperiode (T) synchronisiert sind, weiter mindestens eine elektronische Nebenkarte (CA1, CA2) umfasst, die mindestens einen Nebenprozessor (PA1, PA2) umfasst, der auf eine Nebenuhr (H1, H2) von bestimmter Neben-Zeitperiode (t) synchronisiert ist, die Nebenuhr (H1, H2) schneller ist als die Hauptuhr (H), sequenzierte Aufgaben (S1, S2, S3, S4) von einem der Hauptprozessoren (PP1, PP2) und dem Nebenprozessor (PA1, PA2) gleichzeitig ausgeführt werden müssen, wobei bei dem Verfahren:
- über eine bestimmte Haupt-Zeitperiode (T1) der erste Hauptprozessor (PP1) eine erste sequenzierte Aufgabe (S1) ausführt, während der Nebenprozessor (PA1, PA2) Anweisungen (s1) der ersten sequenzierten Aufgabe (S1) über eine Vielzahl von Neben-Zeitperioden (t1-t10) ausführt;
- über die folgende Haupt-Zeitperiode (T2) der erste Hauptprozessor (PP1, PP2) eine zweite sequenzierte Aufgabe (S2) ausführt;
wobei das Verfahren **dadurch gekennzeichnet ist, dass** es umfasst
- einen Schritt des Sendens (21), durch den ersten Hauptprozessor (PP1, PP2), einer Koordinationsmarkierung (M_{A}) an den Nebenprozessor (PA1, PA2) am Anfang von jeder Haupt-Zeitperiode (T1-T2);
- einen Schritt des Sendens (22), durch den Nebenprozessor (PA1, PA2), eines anhand der letzten empfangenen Koordinationsmarkierung (M_{A}) gebildeten Antwortworts (ACK) an den ersten Hauptprozessor (PP1, PP2) am Ende von jeder Neben-Zeitperiode (t1-t10);
- einen Schritt des Validierens (23), durch den ersten Hauptprozessor (PP1, PP2), des empfangenen Antwortworts (ACK) in Bezug auf die gesendete erste Koordinationsmarkierung (M_{A}), wobei der Schritt des Validierens (23) am Anfang der folgenden Haupt-Zeitperiode (T2) vor dem Senden einer neuen Koordinationsmarkierung (M_{B}) ausgeführt wird; und
- einen Schritt des Signalisierens (25), durch den ersten Hauptprozessor (PP1, PP2), falls das empfangene Antwortwort (ACK) nicht validiert wird, um eine Koordinationsstörung des Nebenprozessors (PA1, PA2) zu signalisieren.

10. Verfahren zur Überwachung nach dem vorstehenden Anspruch, wobei jeder Hauptprozessor (PP1, PP2) der elektronischen Hauptkarte (CP), da die elektronische Vorrichtung mindestens zwei elektronische Nebenkarten (CA1, CA2) umfasst, die Koordination der Ausführung der sequenzierten Aufgaben (S1, S2, S3, S4) durch jeden der Nebenprozessoren (PA1, PA2) überwacht.

## Claims

1. A method for monitoring the coordinated execution of sequenced tasks (S1, S2, S3, S4) by an electronic card (CP) comprising at least one first processor (PP1) and one second processor (PP2) synchronized to one and the same clock (H) of determined time period (T), the execution of the sequenced tasks (S1, S2, S3, S4) being distributed between the processors (PP1, PP2), in which method:
- over a determined time period (T1), the first processor (PP1) executes a first sequenced task (S1) while the second processor (PP2) executes a first accessory task (N1);
- over the consecutive time period (T2), the second processor (PP2) executes a second sequenced task (S2) subsequent to the first sequenced task (S1);
said method comprising
- a step of recording (11) in memory means (4) by the first processor (PP1) of a first identifier (ID1) characterizing the time period (T1) in the course of which the first sequenced task (S1) has been executed, the recording step (11) being carried out in the course of the determined time period (T1) after execution of the first sequenced task (S1);
**characterised by**:
- a step of recording (12) in the memory means (4) by the second processor (PP2) of a second identifier (ID2) characterizing the time period (T1) in the course of which the first accessory task (N1) has been executed, the recording step (12) being carried out in the course of the determined time period (T1) after execution of the first accessory task (N1);
- a step of comparison (13) by the first processor (PP1) of the first identifier (ID1) and of the second identifier (ID2) recorded in the memory means (4), the comparison step (13) being carried out in the course of the consecutive time period (T2); and
- a step of signalling (15) by the first processor (PP1) in the case of failure of the comparison so as to signal a defect of coordination of the processors (PP1, PP2).

2. The monitoring method as claimed in claim 1, in which, the first processor (PP1) executing a second accessory task (N2) over the consecutive time period (T2), the comparison step (13) is carried out in the course of the consecutive time period (T2) before the execution of the second accessory task (N2).

3. The monitoring method as claimed in one of claims 1 to 2, in which the method comprises:
- a step of comparison (14) by the second processor (PP2) of the first identifier (ID1) and of the second identifier (ID2) recorded in the memory means (4), the comparison step (14) being carried out in the course of the consecutive time period (T2) before the execution of the second sequenced task (S2); and
- a step of signalling (15) by the second processor (PP2) in the case of failure of the comparison so as to signal a defect of coordination of the processors (PP1, PP2).

4. The monitoring method as claimed in one of claims 1 to 3, in which the recording steps (11, 12) are implemented directly after the execution of the first accessory task (N1) and of the first sequenced task (S1).

5. The monitoring method as claimed in one of claims 1 to 4, in which the steps of the monitoring method are implemented at each time period (T1, T2).

6. The monitoring method as claimed in one of claims 1 to 5, in which the memory means (4) take the form of a RAM memory (4) linked to the two processors (PP1, PP2).

7. The monitoring method as claimed in one of claims 1 to 5, in which the memory means (4) are independent of the processors (PP1, PP2).

8. The monitoring method as claimed in one of claims 1 to 6, in which the memory means (4) belong to at least one of the processors (PP1, PP2).

9. The monitoring method as claimed in one of claim 1 to 8, in which the electronic card (CP) being a main electronic card (CP) of an electronic device comprising at least two main processors (PP1, PP2) synchronized to a main clock (H) of determined main time period (T), the electronic device furthermore comprising at least one auxiliary electronic card (CA1, CA2) comprising at least one auxiliary processor (PA1, PA2) synchronized to an auxiliary clock (H1, H2) of determined auxiliary time period (t), the auxiliary clock (H1, H2) being faster than the main clock (H), sequenced tasks (S1, S2, S3, S4) having to be carried out simultaneously by one of the main processors (PP1, PP2) and the auxiliary processor (PA1, PA2), in which method:
- over a determined main time period (T1), the first main processor (PP1) executes a first sequenced task (S1) while the auxiliary processor (PA1, PA2) executes instructions (s1) of the first sequenced task (S1) over a plurality of auxiliary time periods (t1-t10);
- over the consecutive main time period (T2), the first main processor (PP1, PP2) executes a second sequenced task (S2);
method **characterised in that** it comprises
- a step of emission (21) by the first main processor (PP1, PP2) of a coordination marker (M_{A}) to the auxiliary processor (PA1, PA2) at the start of each main time period (T1-T2);
- a step of emission (22) by the auxiliary processor (PA1, PA2) of a response word (ACK) formed on the basis of the last coordination marker received (M_{A}) to the first main processor (PP1, PP2) at the end of each auxiliary time period (t1-t10);
- a step of validation (23) by the first main processor (PP1, PP2) of the response word (ACK) received with respect to the first coordination marker (M_{A}) emitted, the validation step (23) being carried out at the start of the consecutive main time period (T2) before the emission of a new coordination marker (M_{B}); and
- a step of signalling (25) by the first main processor (PP1, PP2) if the response word received (ACK) is not valid so as to signal a defect of coordination of the auxiliary processor (PA1, PA2).

10. The monitoring method as claimed in the preceding claim, in which the electronic device comprising at least two auxiliary electronic cards (CA1, CA2), each main processor (PP1, PP2) of the main electronic card (CP) monitors the coordination of the execution of the sequenced tasks (S1, S2, S3, S4) by each of the auxiliary processors (PA1, PA2).
